# EUROPEAN PATENT APPLICATION

(11) **EP 4 187 371 A1**
(43) Date of publication of application: **31.05.2023**
(21) Application number: 21847231.4
(22) Date of filing: 22.07.2021
(51) Int. Cl.: G06F 8/65

(54) **FIRMWARE DATA VERIFICATION DEVICE AND METHOD, AND FIRMWARE UPDATING DEVICE, METHOD AND SYSTEM**

(30) Priority: 24.07.2020 CN 202010722761
(71) Applicant: OMRON Corporation, Kyoto 600-8530 (JP)
(72) Inventor: WANG, Yutao, Shanghai 201201 (CN)
(74) Representative: HGF
(86) International application number: PCT/CN2021/107843
(87) International publication number: WO 2022/017457

(57) **Abstract**

The embodiments of the present disclosure provide a firmware data verification device and method, and a firmware updating device, method and system. The verification method includes: receiving first firmware data sent by a data generation device, wherein the first firmware data includes second firmware data encrypted by the data generation device and a digital signature; verifying the digital signature of the first firmware data; in the situation in which the digital signature has been verified, removing the digital signature from the first firmware data so as to obtain the second firmware data; splitting the second firmware data so as to generate a plurality of encrypted data packets; and sending the plurality of encrypted data packets to a firmware updating device, so that the firmware updating device decrypts the plurality of data packets and performs firmware updating. Therefore, the hardware cost of a firmware updating device may be reduced, and the updating efficiency is improved; in addition, the flexibility of a firmware updating mode may be improved.

## Description

### TECHNICAL FIELD

The present disclosure relates to the technology field of equipment safety, in particular to a firmware data verification device and method, and a firmware updating device, method and system.

### BACKGROUND ART

A firmware is a program stored in a device or chip that undertakes the lowest level of work, and can be upgraded or updated by a specific refresh program. In a usual firmware upgrade or update process, firmware data is sent by a data generator to a firmware updater (i.e., a to-be-upgraded device). The firmware updater usually has a system update program, the system update program executes a firmware update action.

For security reasons, the firmware data itself has confidentiality requirements, so the firmware data itself usually uses encryption and decryption technologies to ensure data confidentiality. On the other hand, firmware data from illegal sources may cause some malicious operations, so source reliability must be ensured. In view of the above data confidentiality requirement and source reliability requirement, the system update program needs to perform data decryption and source verification of received firmware data.

It should be noted that the above introduction to the background is just to facilitate a clear and complete description of the technical solution of the present disclosure, and is elaborated to facilitate the understanding of persons skilled in the art. It cannot be considered that the above technical solutions are known by persons skilled in the art just because these solutions are elaborated in the background of the present disclosure.

### SUMMARY OF INVENTION

However, the inventor found that: if performing data decryption and source verification at the same time, a complexity of the system update program will be higher, the program itself will occupy more storage space, additional hardware cost will be added for some resource-constrained devices (e.g. embedded devices), and an update mode is not flexible enough.

In order to solve at least one of the above problems, the embodiments of the present disclosure provide a firmware data verification device and method, and a firmware updating device, method and system, to expect reduction of hardware cost for the firmware updating device and increased flexibility of a firmware updating mode.

According to one aspect of the embodiments of the present disclosure, a firmware data verification device is provided and includes:
a receiving portion, configured to receive first firmware data sent by a data generation device, wherein the first firmware data includes second firmware data encrypted by the data generation device and a digital signature generated by the data generation device according to the second firmware data;
a verifying portion, configured to verify the digital signature in the first firmware data, so as to determine whether the digital signature has been verified;
a packet generating portion, configured to remove the digital signature from the first firmware data so as to obtain the second firmware data, in the situation in which the digital signature has been verified; and split the second firmware data so as to generate a plurality of encrypted data packets; and
a sending portion, configured to send the plurality of encrypted data packets to a firmware updating device, so that the firmware updating device decrypts the plurality of data packets and performs firmware updating.

Thereby, digital signature verification is performed by a verification device different from the firmware updating device to meet the source reliability requirement, and data decryption is performed by the firmware updating device to meet the data confidentiality requirement; therefore, a complexity of a system update program can be reduced, the storage space occupied by the program itself can be reduced, and the hardware cost of the firmware updating device can also be reduced; and verification of the digital signature is performed by the verification device, which can improve flexibility of a firmware updating mode.

And, the firmware updating device can be partially upgraded by receiving split data packets, thus reducing a memory space occupied by storing complete firmware data, further reducing the hardware cost of the firmware updating device, and improving update efficiency and further increasing the flexibility of the updating mode.

In some embodiments, the plurality of encrypted data packets are sent sequentially in the form of a data stream.

Thereby, the firmware updating device can receive the data packets while decrypting the received data packets and perform firmware updating based on the decrypted data packets, thus enabling partially upgrading performed during data transmission, which not only takes up less memory space occupied by firmware data, but also can speed up an update process to improve update efficiency.

In some embodiments, the verifying portion is used to: decrypt the digital signature in the first firmware data into first digest information via a decryption algorithm; generate second digest information of the second firmware data via a digest algorithm; compare whether the first digest information and the second digest information are consistent; and determine that the digital signature has been verified in the case where the first digest information and the second digest information are consistent.

Thereby, the digital signature is performed by the data generation device and the digital signature verification is performed by the verification device, the flexibility of the firmware updating mode can be further improved without upgrading the firmware updating device in the case where the signature algorithm and digest algorithm themselves need to be updated to improve resistance to cracking.

In some embodiments, the plurality of encrypted data packets are sent via a specialized communication line.

For example, the specialized communication line includes: a local cable connection, a wireless fidelity (WIFI) connection, a Bluetooth connection or a near-field communication (NFC) connection; or a remote virtual private network (VPN) connection.

Thereby, data security can be ensured through the specialized communication line; in addition, firmware updating can be performed through multiple interfaces either locally or remotely, thus further increasing the flexibility of the firmware updating mode.

According to another aspect of the embodiments of the present disclosure, a firmware updating device is provided and includes:
a receiving portion, configured to receive a plurality of encrypted data packets sent by a verification device; wherein the plurality of encrypted data packets are generated by the verification device in the case where a digital signature of firmware data has been verified;
a decrypting portion, configured to decrypt the data packets; and
an updating portion, configured to perform firmware updating according to the decrypted data packets.

Thereby, digital signature verification is performed by a verification device different from the firmware updating device to meet the source reliability requirement, and data decryption is performed by the firmware updating device to meet the data confidentiality requirement; therefore, a complexity of a system update program can be reduced, the storage space occupied by the program itself can be reduced, thus the hardware cost of the firmware updating device can be reduced; and verification of the digital signature is performed by the verification device, which can improve flexibility of a firmware updating mode.

And, the firmware updating device can be partially upgraded by receiving split data packets, thus reducing a memory space occupied by storing complete firmware data, further reducing the hardware cost of the firmware updating device, and improving update efficiency and further increasing the flexibility of the updating mode.

In some embodiments, the receiving portion receives the data packets, the decrypting portion decrypts the received data packets, and the updating portion performs firmware updating according to the decrypted data packets.

Thereby, partially upgrading can be performed during data transmission, which not only takes up less memory space occupied by firmware data, but also can speed up an update process to improve update efficiency.

According to another aspect of the embodiments of the present disclosure, a firmware data verification method is provided and includes:
receiving first firmware data sent by a data generation device, wherein the first firmware data includes second firmware data encrypted by the data generation device and a digital signature generated by the data generation device according to the second firmware data;
verifying the digital signature in the first firmware data, so as to determine whether the digital signature has been verified;
removing the digital signature from the first firmware data so as to obtain the second firmware data, in the situation in which the digital signature has been verified; and splitting the second firmware data so as to generate a plurality of encrypted data packets; and
sending the plurality of encrypted data packets to a firmware updating device, so that the firmware updating device decrypts the plurality of data packets and performs firmware updating.

According to another aspect of the embodiments of the present disclosure, a firmware updating method is provided and includes:
receiving a plurality of encrypted data packets sent by a verification device; wherein the plurality of encrypted data packets are generated by the verification device in the case where a digital signature of firmware data has been verified;
decrypting the data packets; and
performing firmware updating according to the decrypted data packets.

According to another aspect of the embodiments of the present disclosure, a firmware updating system is provided and includes:
a data generation device, configured to generate first firmware data, the first firmware data including second firmware data encrypted by the data generation device and a digital signature generated by the data generation device according to the second firmware data;
a verification device, configured to receive the first firmware data sent by the data generation device and verify the digital signature in the first firmware data, so as to determine whether the digital signature has been verified; remove the digital signature from the first firmware data so as to obtain the second firmware data, in the situation in which the digital signature has been verified; and split the second firmware data so as to generate a plurality of encrypted data packets; and
a firmware updating device, configured to receive the plurality of encrypted data packets sent by the verification device and decrypt the data packets; and perform firmware updating according to the decrypted data packets.

One of the advantageous effects of the embodiments of the present disclosure lies in: digital signature verification is performed by a verification device different from the firmware updating device to meet the source reliability requirement, and data decryption is performed by the firmware updating device to meet the data confidentiality requirement; therefore, a complexity of a system update program can be reduced, the storage space occupied by the program itself can be reduced, thus the hardware cost of the firmware updating device can be reduced; and verification of the digital signature is performed by the verification device, which can improve flexibility of a firmware updating mode.

And, the firmware updating device can be partially upgraded by receiving split data packets, thus reducing a memory space occupied by storing complete firmware data, further reducing the hardware cost of the firmware updating device, and improving update efficiency and further increasing the flexibility of the updating mode.

Referring to the later description and figures, specific implementations of the present disclosure are disclosed in detail, indicating a manner that the principle of the present disclosure can be adopted. It should be understood that the implementations of the present disclosure are not limited in terms of the scope. Within the scope of the spirit and terms of the appended claims, the implementations of the present disclosure include many changes, modifications and equivalents.

### BRIEF DESCRIPTION OF DRAWINGS

The included figures are used to provide a further understanding on the embodiments of the present disclosure, constitute a part of the description, are used to illustrate the implementations of the present disclosure, and expound the principle of the present disclosure together with the text description. Obviously, the figures in the following description are only some embodiments of the present disclosure. Persons skilled in the art can also obtain other figures based on these figures under the premise that they do not pay inventive labor. In the figures:
FIG. 1 is a schematic diagram of a firmware data verification device in the embodiments of the present disclosure;
FIG. 2 is a schematic diagram of a firmware updating device in the embodiments of the present disclosure;
FIG. 3 is a schematic diagram of a data generation device, a verification device and a firmware updating device in the embodiments of the present disclosure;
FIG. 4 is a schematic diagram of a data generation device in the embodiments of the present disclosure;
FIG. 5 is a schematic diagram of a verification device in the embodiments of the present disclosure;
FIG. 6 is a schematic diagram of a firmware updating device in the embodiments of the present disclosure;
FIG. 7 is a schematic diagram of a firmware data verification method in the embodiments of the present disclosure;
FIG. 8 is a schematic diagram of a firmware updating method in the embodiments of the present disclosure;
FIG. 9 is a schematic diagram of a firmware updating system in the embodiments of the present disclosure.

### DESCRIPTION OF EMBODIMENTS

Referring to the figures, through the following description, the above and other features of the present disclosure will become obvious. The description and figures specifically disclose particular implementations of the present disclosure, showing partial implementations which can adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of' or "a type of', but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

Features that are described and/or shown with respect to one implementation can be used in the same way or in a similar way in one or more other implementations, can be combined with or replace features in the other implementations. It should be emphasized that the term "comprise/include" when being used herein refers to the presence of a feature, a whole piece, a step or a component, but does not exclude the presence or addition of one or more other features, whole pieces, steps or components.

The implementations of the present disclosure are described below with reference to the figures. In the embodiments of the present disclosure, an embedded device is taken as an example for illustration, for example a firmware updating device (a device to be upgraded) is a Programmable Logic Controller (PLC) device, but the present disclosure is not limited to the embedded device, and is not limited to a resource-constrained device, and can also be applied into devices with unrestricted resources.

### EMBODIMENTS OF THE FIRST ASPECT

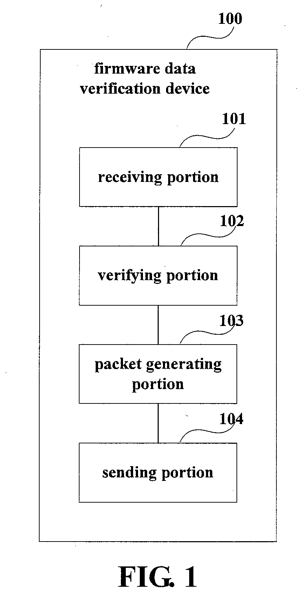

The embodiments of the present disclosure provide a firmware data verification device. FIG. 1 is a schematic diagram of a firmware data verification device in the embodiments of the present disclosure, as shown in FIG. 1, a firmware data verification device 100 includes:
a receiving portion 101, configured to receive first firmware data sent by a data generation device, wherein the first firmware data includes second firmware data encrypted by the data generation device and a digital signature generated by the data generation device according to the second firmware data;
a verifying portion 102, configured to verify the digital signature in the first firmware data, so as to determine whether the digital signature has been verified;
a packet generating portion 103, configured to remove the digital signature from the first firmware data so as to obtain the second firmware data, in the situation in which the digital signature has been verified; and split the second firmware data so as to generate a plurality of encrypted data packets; and
a sending portion 104, configured to send the plurality of encrypted data packets to a firmware updating device, so that the firmware updating device decrypts the plurality of data packets and performs firmware updating.

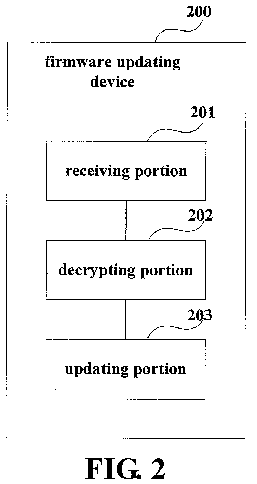

The embodiments of the present disclosure further provide a firmware updating device. FIG. 2 is a schematic diagram of a firmware updating device in the embodiments of the present disclosure, as shown in FIG. 2, a firmware updating device 200 includes:
a receiving portion 201, configured to receive a plurality of encrypted data packets sent by a verification device; wherein the plurality of encrypted data packets are generated by the verification device in the case where a digital signature of firmware data has been verified;
a decrypting portion 202, configured to decrypt the data packets; and
an updating portion 203, configured to perform firmware updating according to the decrypted data packets.

It's worth noting that the above FIG. 1 and FIG. 2 are only schematic description of the embodiments of the present disclosure, but the present disclosure is not limited to this; for example, other components or devices may be further provided, see relevant technologies for details, description is omitted here. For a component or element which is not specially indicated in FIG. 1 and FIG. 2, relevant technologies may be referred to, the present disclosure does not make limitations.

Thereby, digital signature verification is performed by a verification device different from the firmware updating device to meet the source reliability requirement, and data decryption is performed by the firmware updating device to meet the data confidentiality requirement; therefore, a complexity of a system update program can be reduced, the storage space occupied by the program itself can be reduced, thus the hardware cost of the firmware updating device can be reduced; and verification of the digital signature is performed by the verification device, which can improve flexibility of a firmware updating mode.

And, the firmware updating device can be partially upgraded by receiving a plurality of split data packets, thus reducing a memory space occupied by storing complete firmware data, further reducing the hardware cost of the firmware updating device, and improving update efficiency and further increasing the flexibility of the updating mode.

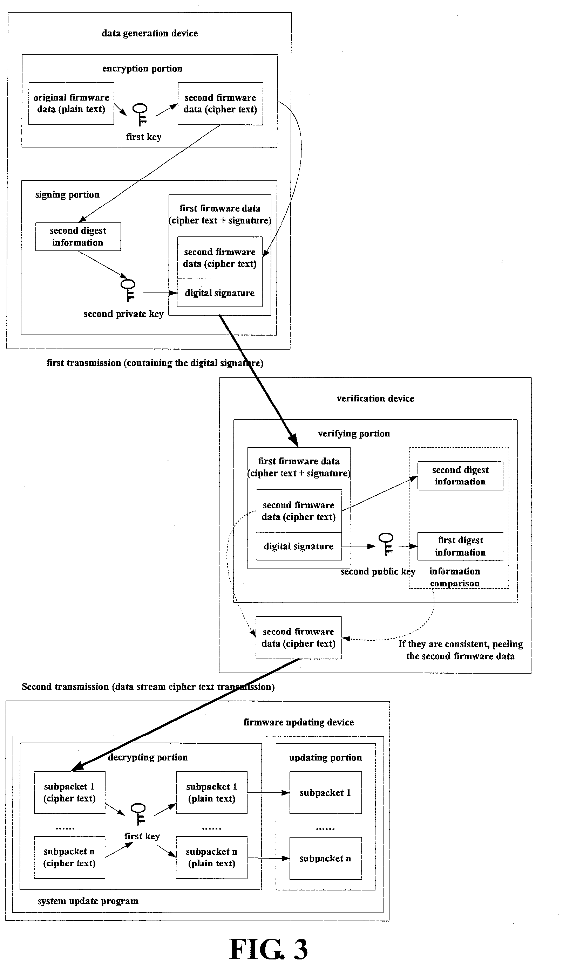

FIG. 3 is a schematic diagram of a data generation device, a verification device and a firmware updating device in the embodiments of the present disclosure. As shown in FIG. 3, for a firmware updating device (a device to be upgraded), a data generation device may not be local, thus data needs to be transmitted remotely, and the problems of source reliability and data confidentiality are introduced.

As shown in FIG. 3, in the embodiments of the present disclosure, secondary transmission of firmware data is performed. A verification device is located locally and can perform point-to-point connection with the device to be upgraded, thus for the second transmission (cipher text transmission) occurred between the verification device and the device to be upgraded, there is no need to verify the source reliability, but only data confidentiality needs to be ensured. If the source reliability between the verification device and the device to be upgraded is ensured by some other techniques, such as hardware verification, secure handshake, etc., the verification device can also not be local, in which case the second transmission can also be remote transmission.

As shown in FIG. 3, the first transmission (digital signature + cipher text transmission) contains a digital signature, meanwhile the second firmware data itself is an encrypted cipher text, hence even remote transmission can also ensure both source reliability and data confidentiality. For the specific contents of the first transmission and second transmission, please refer to relevant technologies, description is omitted here.

In some embodiments, the data generation device is a firmware data development device, and after compiling and generating a plain text of original firmware data, the data generation device will perform a series of operations such as encryption, digital signature, etc., thereby ensuring source reliability and data confidentiality.

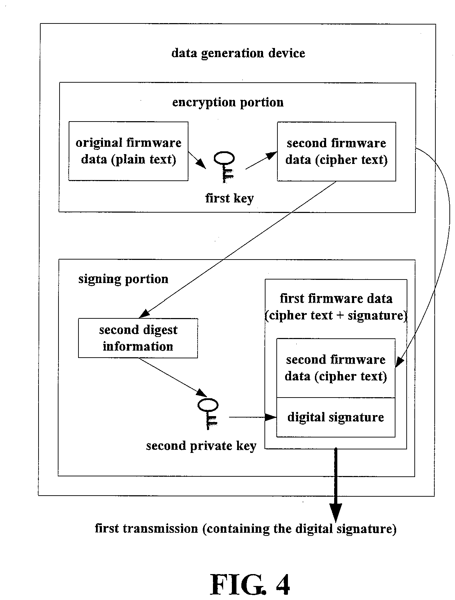

FIG. 4 is a schematic diagram of a data generation device in the embodiments of the present disclosure. As shown in FIG. 4, original firmware data generated by the data generation device is a plain text, then the original firmware data (plain text) is encrypted to the second firmware data (cipher text) by using a first key through an encryption portion, then the first firmware data (cipher text + digital signature) is generated after an exclusive digital signature is added through a signing portion, and finally is sent to the outside through first transmission.

As shown in FIG. 4, a digital signature process may be as follows: first, generating second digest information of the second firmware data via a digest algorithm, then encrypting the second digest information into a digital signature using a private key (a second private key), finally combining the digital signature and the second firmware data into the first firmware data. FIG. 4 illustratively describes the digital signature and encryption, the present disclosure is not limited to this, other encryption and digital signature modes are also possible.

In some embodiments, encryption and a digital signature may use a symmetric encryption algorithm, and may also use an asymmetric encryption algorithm. In case of symmetric encryption, an encryption portion uses the same key as a decryption portion inside a device to be upgraded. In case of asymmetric encryption, the encryption portion uses a public key for encryption and the decryption portion inside the device to be upgraded uses a private key for decryption. Common algorithms include MD5, SHA-1, SM3, etc. For specific contents on encryption and decryption, digital signatures, etc., please refer to related technologies, there is no more detailed description here.

In some embodiments, the verification device may be a local auxiliary tool that implements a verification algorithm through software; or, may be a separate security module that implements a verification process through hardware; or may also be a service program located on a remote server. The present disclosure does not define a specific form of the verification device.

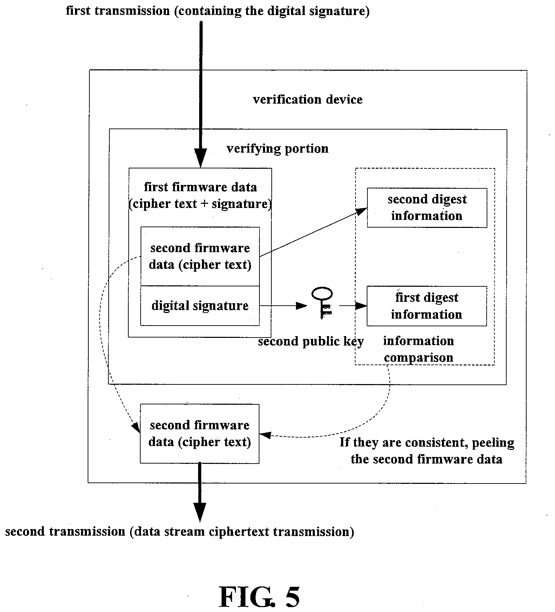

FIG. 5 is a schematic diagram of a verification device in the embodiments of the present disclosure. As shown in FIG. 5, the verification device is configured to verify whether a digital signature of the first firmware data (cipher text + digital signature) received from the first transmission is reliable, thereby verifying whether a source of firmware data is reliable. Only verified (i.e., digital signature verification is passed) firmware data may be allowed to be sent to the outside through the second transmission. If the verification fails, the verification device does not send the second firmware data.

In some embodiments, the verifying portion is used to: decrypt the digital signature in the first firmware data into first digest information via a decryption algorithm; generate second digest information of the second firmware data via a digest algorithm; compare whether the first digest information and the second digest information are consistent; and determine that the digital signature has been verified in the case where the first digest information and the second digest information are consistent.

For example, as shown in FIG. 5, a verification process is as follows: first, decrypting the digital signature to the first digest information by using a sender's public key (second public key), then generating the second digest information of the second firmware data (cipher text) via the same digest algorithm as the signature portion in the data generation device, then comparing whether the first digest information and the second digest information are consistent. If the first digest information and the second digest information are consistent, the verification is passed, otherwise the verification fails. FIG. 5 illustratively describes digital signature verification, the present disclosure is not limited to this, other digital signature verification modes are also possible.

Thereby, the digital signature verification is performed by the verification device, the flexibility of the firmware updating mode can be further improved without upgrading the firmware updating device in the case where the signature algorithm and digest algorithm themselves need to be updated to improve resistance to cracking.

For example, a digital signature verification process is performed by an external verification device, so there is no need to implement a series of complex algorithms such as a digest algorithm and a signature algorithm inside the device to be upgraded. In the simplest case, the device to be upgraded itself only needs to support a decryption part of a simple symmetric encryption algorithm, storage space occupied is small and an update mode is flexible.

In addition, a specific splitting mode in which the verification device splits the encrypted second firmware data into several encrypted packets can be implemented by referring to related technologies, so it is not detailed here.

In some embodiments, the firmware updating device (the device to be upgraded) is a local device that needs firmware upgrade, can be a PLC device, an industrial automation product, a medical device, a home appliance or a digital product, etc. Embodiments of the present disclosure are not limited to this.

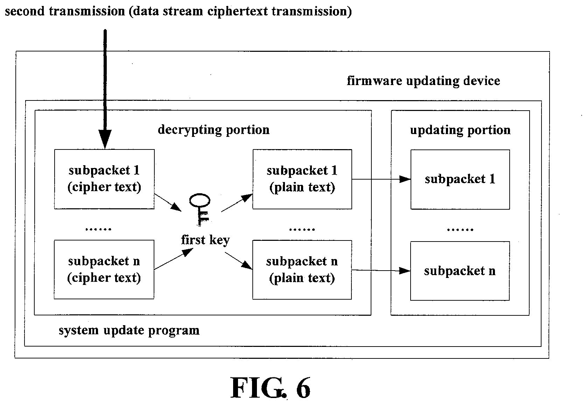

FIG. 6 is a schematic diagram of a firmware updating device in the embodiments of the present disclosure, as shown in FIG. 6, the verification device sends the second firmware data (cipher text) to the firmware updating device (the device to be upgraded). In the device to be upgraded, a firmware update action may be performed by an internal system update program.

In some embodiments, the plurality of encrypted data packets are sent sequentially in the form of a data stream.

For example, since the device to be upgraded is resource-constrained and may not have enough space to store complete firmware data, the verification device may split the encrypted second firmware data into several encrypted packets (sub-packets 1...... n) and send them to the device to be upgraded one by one.

As shown in FIG. 6, every time when a complete subpacket (e.g., a subpacket i, i is greater than or equal to 1 and less than or equal to n) is received by the system update program of the firmware updating device from the second transmission, the subpacket i is decrypted into a plaintext subpacket i by the decryption portion using the first key, and then is handed over to the updating portion for partially upgrade. After all subpackets of the second firmware data have been transmitted, the updating portion completes upgrade of all sub-packets, i.e., completes an entire firmware update process. This process is equivalent to a process in which the updating portion uses a complete firmware data plain text for the upgrade.

Thereby, the firmware updating device may receive the data packets while decrypting the received data packets and perform firmware updating based on the decrypted data packets, thus enabling partially upgrading performed during data transmission, which not only takes up less memory space occupied by firmware data, but also can speed up an update process to improve update efficiency.

For example, the device to be upgraded does not need to wait for receiving all the encrypted firmware data before upgrading, it may decrypt and partially upgrade while receiving the firmware data, so it may start decryption and firmware updating as soon as it receives a complete specific data packet, no extra memory space is needed to store the complete firmware data, and the upgrade may be completed immediately after all the data packets are received, which is more resource-saving and efficient than the update mode of decrypting and verifying after all the encrypted firmware data are received.

In some embodiments, the plurality of encrypted data packets are sent via a specialized communication line.

For example, the specialized communication line includes: a local cable connection, a wireless fidelity (WIFI) connection, a Bluetooth connection or a near-field communication (NFC) connection; or a remote virtual private network (VPN) connection. The present disclosure is not limited to this, other specific communication lines are also possible.

Thereby, data security can be ensured through the specialized communication line; in addition, firmware updating can be performed through multiple interfaces either locally or remotely, thus further increasing the flexibility of the firmware updating mode.

For example, information security is now being paid more and more attention, and with the increase of calculation ability, encryption and decryption algorithms themselves are constantly being updated and upgraded. In the embodiments of the present disclosure, there is no need to frequently update the system upgrade program itself, only the encrypting portion, the signing portion and the verifying portion needed to be updated. The encrypting portion, the signing portion and the verifying portion are located outside the device to be upgraded and are usually implemented by an upper computer software or a dedicated hardware, thus this update mode is more convenient than an embedded software located on the device to be upgraded.

The above content is only a schematic description of each device or component, but the present disclosure is not limited to this, and for a specific content of each device or component, relevant technologies can be referred to; moreover, a device or component which is not shown in FIG. 1 to FIG. 6 can be added, or one or more devices or components in FIG. 1 to FIG. 6 can be reduced.

As can be known from the above embodiments, digital signature verification is performed by a verification device different from the firmware updating device to meet the source reliability requirement, and data decryption is performed by the firmware updating device to meet the data confidentiality requirement; therefore, a complexity of a system update program can be reduced, the storage space occupied by the program itself can be reduced, thus the cost of the firmware updating device can be reduced; and verification of the digital signature is performed by the verification device, which can improve flexibility of a firmware updating mode.

And, the firmware updating device can be partially upgraded by receiving a plurality of split data packets, thus reducing a memory space occupied by storing complete firmware data, further reducing the hardware cost of the firmware updating device, and improving update efficiency and further increasing the flexibility of the updating mode.

### EMBODIMENTS OF THE SECOND ASPECT

The embodiments of the present disclosure provide a firmware data verification method and a firmware updating method, the contents same as the embodiments of the first aspect are not repeated.

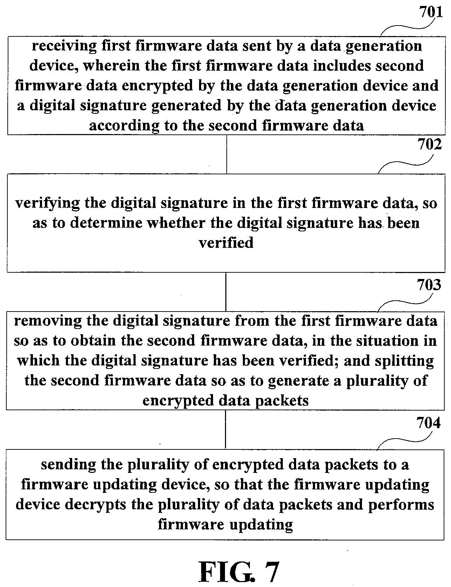

FIG. 7 is a schematic diagram of a firmware data verification method in the embodiments of the present disclosure, executed by a firmware data verification device. As shown in FIG. 7, the verification method includes:
701, receiving first firmware data sent by a data generation device, wherein the first firmware data includes second firmware data encrypted by the data generation device and a digital signature generated by the data generation device according to the second firmware data;
702, verifying the digital signature in the first firmware data, so as to determine whether the digital signature has been verified;
703, removing the digital signature from the first firmware data so as to obtain the second firmware data, in the situation in which the digital signature has been verified; and splitting the second firmware data so as to generate a plurality of encrypted data packets; and
704, sending the plurality of encrypted data packets to a firmware updating device, so that the firmware updating device decrypts the plurality of data packets and performs firmware updating.

In some embodiments, the plurality of encrypted data packets are sent sequentially in the form of a data stream.

In some embodiments, decrypting the digital signature in the first firmware data into first digest information via a decryption algorithm; generating second digest information of the second firmware data via a digest algorithm; comparing whether the first digest information and the second digest information are consistent; and determining that the digital signature has been verified in the case where the first digest information and the second digest information are consistent.

In some embodiments, the plurality of encrypted data packets are sent via a specialized communication line.

For example, the specialized communication line includes: a local cable connection, a wireless fidelity (WIFI) connection, a Bluetooth connection or a near-field communication (NFC) connection; or a remote virtual private network (VPN) connection.

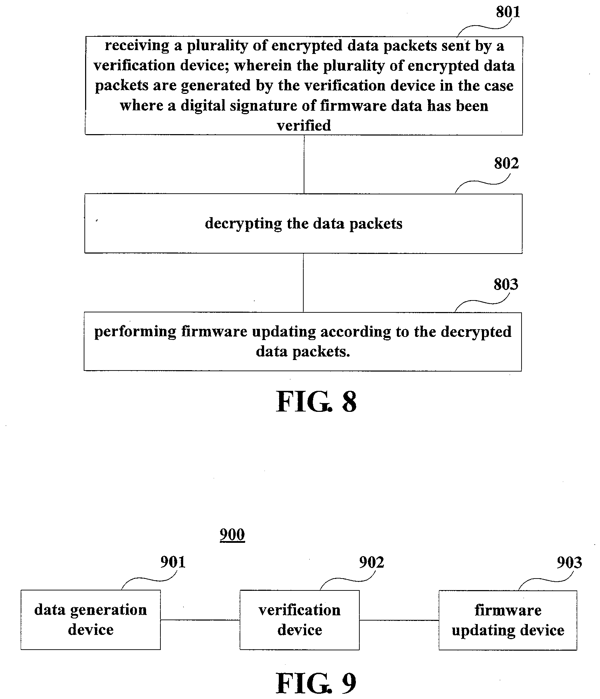

FIG. 8 is a schematic diagram of a firmware updating method in the embodiments of the present disclosure, executed by a firmware updating device. As shown in FIG. 8, the firmware updating method includes:
801, receiving a plurality of encrypted data packets sent by a verification device; wherein the plurality of encrypted data packets are generated by the verification device in the case where a digital signature of firmware data has been verified;
802, decrypting the data packets; and
803, performing firmware updating according to the decrypted data packets.

In some embodiments, the firmware updating device can receive the data packets while decrypting the received data packets and perform firmware updating based on the decrypted data packets, thus enabling partially upgrading performed during data transmission, which not only takes up less memory space occupied by firmware data, but also can speed up an update process to improve update efficiency.

It's worth noting that the above FIG. 7 and FIG. 8 are only schematic description of the embodiments of the present disclosure, but the present disclosure is not limited to this. For example, an execution sequence of each step can be adjusted appropriately, moreover other some steps can be increased or reduced. Persons skilled in the art can make appropriate modifications according to the above contents, not limited to the records in the above FIG. 7 and FIG. 8.

As can be known from the above embodiments, digital signature verification is performed by a verification device different from the firmware updating device to meet the source reliability requirement, and data decryption is performed by the firmware updating device to meet the data confidentiality requirement; therefore, a complexity of a system update program can be reduced, the storage space occupied by the program itself can be reduced, thus the hardware cost of the firmware updating device can be reduced; and verification of the digital signature is performed by the verification device, which can improve flexibility of a firmware updating mode.

And, the firmware updating device can be upgraded partially by receiving a plurality of split data packets, thus reducing a memory space occupied by storing complete firmware data, further reducing the hardware cost of the firmware updating device, and improving update efficiency and further increasing the flexibility of the updating mode.

### EMBODIMENTS OF THE THIRD ASPECT

The embodiments of the present disclosure provide a firmware updating system, the contents same as the embodiments of the first and second aspects are not repeated.

FIG. 9 is a schematic diagram of a firmware updating system in the embodiments of the present disclosure, as shown in FIG. 9, a firmware updating system 900 includes:
a data generation device 901, configured to generate first firmware data, the first firmware data including second firmware data encrypted by the data generation device 901 and a digital signature generated by the data generation device 901 according to the second firmware data;
a verification device 902, configured to receive the first firmware data sent by the data generation device and verify the digital signature in the first firmware data, so as to determine whether the digital signature has been verified; remove the digital signature from the first firmware data so as to obtain the second firmware data, in the situation in which the digital signature has been verified; and split the second firmware data so as to generate a plurality of encrypted data packets; and
a firmware updating device 903, configured to receive the plurality of encrypted data packets sent by the verification device and decrypt the data packets; and perform firmware updating according to the decrypted data packets.

As can be known from the above embodiments, digital signature verification is performed by a verification device different from the firmware updating device to meet the source reliability requirement, and data decryption is performed by the firmware updating device to meet the data confidentiality requirement; therefore, a complexity of a system update program can be reduced, the storage space occupied by the program itself can be reduced, thus the hardware cost of the firmware updating device can be reduced; and verification of the digital signature is performed by the verification device, which can improve flexibility of a firmware updating mode.

And, the firmware updating device can be upgraded partially by receiving a plurality of split data packets, thus reducing a memory space occupied by storing complete firmware data, further reducing the hardware cost of the firmware updating device, and improving update efficiency and further increasing the flexibility of the updating mode.

The present disclosure is described by combining with the specific implementations, however persons skilled in the art should clearly know that these descriptions are exemplary and do not limit the protection scope of the present disclosure. Persons skilled in the art can make various variations and modifications to the present disclosure based on the spirit and principle of the present disclosure, these variations and modifications are also within the scope of the present disclosure.

The preferred implementations of the present disclosure are described with reference to the figures. Many features and advantages of these implementations are clear according to the detailed Description, thus the attached claims aim to cover all these features and advantages of these implementations falling into the true spirit and scope. In addition, persons skilled in the art can easily conceive many modifications and variations, thus it is not intended to limit the implementations of the present disclosure to the exemplified and described precise structures and operations, but all suitable modifications, variations and equivalents falling into their scopes can be covered.

As for the implementations including the above embodiments, the following supplements are also disclosed:
Supplement 1. A firmware data verification method, including:
   receiving first firmware data sent by a data generation device, wherein the first firmware data includes second firmware data encrypted by the data generation device and a digital signature generated by the data generation device according to the second firmware data;
   verifying the digital signature in the first firmware data, so as to determine whether the digital signature has been verified;
   removing the digital signature from the first firmware data so as to obtain the second firmware data, in the situation in which the digital signature has been verified; and splitting the second firmware data so as to generate a plurality of encrypted data packets; and
   sending the plurality of encrypted data packets to a firmware updating device, so that the firmware updating device decrypts the plurality of data packets and performs firmware updating.
Supplement 2. The method according to Supplement 1, wherein the plurality of encrypted data packets are sent sequentially in the form of a data stream.
Supplement 3. The method according to Supplement 1, wherein verifying the digital signature of the first firmware data includes:
   decrypting the digital signature in the first firmware data into a first digest information via a decryption algorithm;
   generating second digest information of the second firmware data via a digest algorithm;
   comparing whether the first digest information and the second digest information are consistent; and
   determining the digital signature has been verified, in the situation in which the first digest information and the second digest information are consistent.
Supplement 4. The method according to Supplement 1, wherein the plurality of encrypted data packets are sent sequentially to the firmware updating device via a specialized communication line.
Supplement 5. The method according to Supplement 4, wherein the specialized communication line includes: a local cable connection, a wireless fidelity (WIFI) connection, a Bluetooth connection or a near-field communication (NFC) connection; or a remote virtual private network (VPN) connection.
Supplement 6. A firmware updating method, including:
   receiving a plurality of encrypted data packets sent by a verification device; wherein the plurality of encrypted data packets are generated by the verification device in the case where a digital signature of firmware data has been verified;
   decrypting the data packets; and
   performing firmware updating according to the decrypted data packets.
Supplement 7. The method according to Supplement 6, wherein the plurality of data packets are received sequentially in the form of a data stream.
Supplement 8. The method according to Supplement 7, wherein the firmware updating device receives the data packets, decrypts the received data packets, and performs firmware updating according to the decrypted data packets.
Supplement 9. The method according to Supplement 6, wherein the plurality of encrypted data packets are received sequentially via a specialized communication line.
Supplement 10. The method according to Supplement 9, wherein the specialized communication line includes: a local cable connection, a wireless fidelity (WIFI) connection, a Bluetooth connection or a near-field communication (NFC) connection; or a remote virtual private network (VPN) connection.
Supplement 11. An electronic device, including a storage storing a computer program, and a processor configured to execute the computer program to implement the firmware data verification method according to any one of Supplements 1 to 5, or the firmware updating method according to any one of Supplements 6 to 10.
Supplement 12. A storage medium storing a computer readable program, wherein the computer readable program causes a computer to execute the firmware data verification method according to any one of Supplements 1 to 5, or the firmware updating method according to any one of Supplements 6 to 10, in the electronic device.

## Claims

1. A firmware data verification device, **characterized in that** the verification device comprises:
a receiving portion, configured to receive first firmware data sent by a data generation device, wherein the first firmware data comprises second firmware data encrypted by the data generation device and a digital signature generated by the data generation device according to the second firmware data;
a verifying portion, configured to verify the digital signature in the first firmware data, so as to determine whether the digital signature has been verified;
a packet generating portion, configured to remove the digital signature from the first firmware data so as to obtain the second firmware data, in the situation in which the digital signature has been verified; and split the second firmware data so as to generate a plurality of encrypted data packets; and
a sending portion, configured to send the plurality of encrypted data packets to a firmware updating device, so that the firmware updating device decrypts the plurality of data packets and performs firmware updating.

2. The device according to claim 1, **characterized in that** the plurality of encrypted data packets are sent sequentially in the form of a data stream.

3. The device according to claim 1, **characterized in that** the verifying portion is used to: decrypt the digital signature in the first firmware data into first digest information via a decryption algorithm; generate second digest information of the second firmware data via a digest algorithm; compare whether the first digest information and the second digest information are consistent; and determine that the digital signature has been verified in the case where the first digest information and the second digest information are consistent.

4. The device according to claim 1, **characterized in that** the plurality of encrypted data packets are sent via a specialized communication line.

5. The device according to claim 4, **characterized in that** the specialized communication line comprises: a local cable connection, a wireless fidelity connection, a Bluetooth connection or a near-field communication connection; or a remote virtual private network connection.

6. A firmware updating device, **characterized in that** the device comprises:
a receiving portion, configured to receive a plurality of encrypted data packets sent by a verification device; wherein the plurality of encrypted data packets are generated by the verification device in the case where a digital signature of firmware data has been verified;
a decrypting portion, configured to decrypt the data packets; and
an updating portion, configured to perform firmware updating according to the decrypted data packets.

7. The device according to claim 6, **characterized in that** the receiving portion receives the data packets, the decrypting portion decrypts the received data packets, and the updating portion performs firmware updating according to the decrypted data packets.

8. A firmware data verification method, **characterized in that** the verification method comprises:
receiving first firmware data sent by a data generation device, wherein the first firmware data comprises second firmware data encrypted by the data generation device and a digital signature generated by the data generation device according to the second firmware data;
verifying the digital signature in the first firmware data, so as to determine whether the digital signature has been verified;
removing the digital signature from the first firmware data so as to obtain the second firmware data, in the situation in which the digital signature has been verified; and splitting the second firmware data so as to generate a plurality of encrypted data packets; and
sending the plurality of encrypted data packets to a firmware updating device, so that the firmware updating device decrypts the plurality of data packets and performs firmware updating.

9. A firmware updating method, **characterized in that** the method comprises:
receiving a plurality of encrypted data packets sent by a verification device; wherein the plurality of encrypted data packets are generated by the verification device in the case where a digital signature of firmware data has been verified;
decrypting the data packets; and
performing firmware updating according to the decrypted data packets.

10. A firmware updating system, **characterized in that** the system comprises:
a data generation device, configured to generate first firmware data, the first firmware data comprising second firmware data encrypted by the data generation device and a digital signature generated by the data generation device according to the second firmware data;
a verification device, configured to receive the first firmware data sent by the data generation device and verify the digital signature in the first firmware data, so as to determine whether the digital signature has been verified; remove the digital signature from the first firmware data so as to obtain the second firmware data, in the situation in which the digital signature has been verified; and split the second firmware data so as to generate a plurality of encrypted data packets; and
a firmware updating device, configured to receive the plurality of encrypted data packets sent by the verification device and decrypt the data packets; and perform firmware updating according to the decrypted data packets.
